# EUROPÄISCHE PATENTSCHRIFT

(11) **EP 0 528 286 B1**
(45) Veröffentlichungstag und Bekanntmachung des Hinweises auf die Patenterteilung: **05.04.1995**
(21) Anmeldenummer: 92113464.9
(22) Anmeldetag: 07.08.1992
(51) Int. Cl.: B25B 1/18, B23Q 3/18

(54) **Spannstock, insbesondere Maschinenspannstock**
Vice, especially machine vice
Etau, notamment étau pour machines

(30) Priorität: 16.08.1991 DE 4127012
(43) Veröffentlichungstag der Anmeldung: 24.02.1993
(73) Patentinhaber: Röhm GmbH, 89567 Sontheim (DE)
(72) Erfinder: Pesch, Karl, W-8880 Dillingen/Donau (DE)
(74) Vertreter: Fay, Hermann, Dipl.-Phys. Dr.

(56) Entgegenhaltungen:
- DE-A- 3 919 560
- DE-C- 630 874
- FR-A- 2 531 889
- US-A- 2 679 177
- PATENT ABSTRACTS OF JAPAN vol. 7, no. 106 (M-213)(1251) 10. Mai 1983 & JP-A-58 028 444 (TOYODA JUDI SHOKKI SEISAKUSHO KK) 19 Februar 1983

## Beschreibung

Die Erfindung betrifft einen Spannstock, insbesondere Maschinenspannstock, mit einem Spannstockkörper und zwei sich zentrisch in Bezug auf eine Spannmitte bewegenden Spannteilen, die im Spannstockkörper verschiebbar geführt und in Führungsrichtung zueinander gegenläufig durch eine die Spannteile mit gleicher Antriebskraft beaufschlagende, druckmittelbetätigte Zylinderkolbenanordnung antreibbar, sowie zwangsweise miteinander durch ein Getriebe mit einem Getriebeglied verbunden sind, das in einem als Drehgelenk mit zur Führungsrichtung der Spannteile senkrechter Gelenkachse ausgebildeten Anschlußgelenk gelagert ist und mit der Gelenkachse die Lage der Spannmitte in Bezug auf den Spannstockkörper bestimmt sowie zwei sich in Bezug auf die Gelenkachse mit gleichem Abstand gegenüber liegende Verbindungsgelenke aufweist, die ebenfalls als Drehgelenke mit zu der des Anschlußgelenks paralleler Gelenkachse ausgebildet und über weitere Zwischengelenke mit den Spannteilen verbunden sind.

Die Spannteile tragen jeweils eine Spannbacke, die unmittelbar an das Spannteil angearbeitet oder in Führungsrichtung versetzbar am Spannteil befestigt sein kann. An den Spannbacken kann ein Werkstück zentrisch zur Spannmitte von außen oder innen gespannt werden.

Aus der DE 39 19 560 A1 ist ein Spannstock bekannt, der die eingangs genannten Merkmale aufweist und bei dem das die Lage der Spannmitte in Bezug auf den Spannstockkörper bestimmende Anschlußgelenk ortsfest im Spannstockkörper angeordnet ist. Bei diesem Spannstock besteht mithin keine Möglichkeit, die Lage der Spannmitte an unterschiedliche Spannanforderungen anzupassen.

Bei einem aus der CH-PS 307 069 bekannten Spannstock ist im Spannstockkörper drehbar und axial unverschiebbar eine Schraubspindel gelagert, die zwei gegenläufige Gewindeabschnitte aufweist, von welchen jeder in einer an den Spannteilen ausgebildeten Spindelmutter läuft, so daß durch Drehen der Schraubspindel die Spannteile zentrisch zur Spannmitte gegeneinander verschoben werden. - Ein solcher Spannstock ermöglicht keine kraftbetätigte Spannung des Werkstücks.

Der Erfindung liegt die Aufgabe zugrunde, einen Spannstock der eingangs genannten Art so auszubilden, daß die Lage der Spannmitte verändert werden kann.

Diese Aufgabe wird durch die Erfindung dadurch gelöst, daß die Zwischengelenke als Schubgelenke mit sowohl zur Führungsrichtung der Spannteile als auch zur Gelenkachse des Anschlußgelenkes senkrecht stehender Gelenkachse ausgebildet sind und daß das Getriebeglied über das Anschlußgelenk an einer am Spannstockkörper vorgesehenen Lagerplatte gelagert ist, die um eine Achse verdrehbar ist, die zur Gelenkachse des Anschlußgelenks parallel verläuft und quer zur Führungsrichtung der Spannteile exzentrisch versetzt ist.

Dadurch ergibt sich der Vorteil, daß die Lage der Gelenkachse des Anschlußgelenks und damit die Spannmitte durch die exzentrische Lagerung des Getriebegliedes zu verschieben ist, wobei die dabei auftretenden Querstellungen durch die Schubgelenke aufgefangen werden.

Eine besonders einfache und hinsichtlich der Genauigkeit der gegenläufigen Führung beider Spannteile vorteilhafte Ausbildung der Erfindung ist dadurch gekennzeichnet, daß die Spannteile quer zur Führungsrichtung nebeneinander liegende Endstücke aufweisen, die in Führungsrichtung sowohl sich gegenseitig als auch das Getriebeglied übergreifen.

Zweckmäßigerweise ist jedes Schubgelenk von einer in Richtung seiner Gelenkachse verlaufenden Führungsnut im Endstück und einem in der Führungsnut verschiebbaren Nutstein gebildet, der einen zum zugeordneten Verbindungsgelenk gehörenden Gelenkzapfen trägt. Die Dreh- und/oder Schubgelenke können zur Reibungsverminderung wälzgelagert sein.

In weiter bevorzugter Ausführungsform ist das Getriebeglied als Getriebescheibe ausgebildet und unter und in der Mitte zwischen den Endstücken der Spannteile angeordnet, was den Vorteil besitzt, daß mit einer einzigen Getriebescheibe eine symmetrische Kraftübertragung zwischen den Spannteilen möglich ist. Die in der Ebene der Getriebescheibe verlaufende Verbindungsgerade zwischen den Achsen der beiden Verbindungsgelenke und des Anschlußgelenks steht dabei im Rahmen des Bewegungsspiels der Spannteile etwa senkrecht zu deren Führungsrichtung, so daß der Abstand zwischen jeweils einem der Verbindungsgelenke und dem Anschlußgelenk im wesentlichen voll als Hebelarm zur Wirkung kommt und die im Getriebe übertragenen Kräfte entsprechend klein sind.

Günstig ist dabei, wenn das Getriebeglied in einer Aussparung im Boden des Spannstockkörpers liegt, die an der Unterseite des Spannstockkörpers durch die Lagerplatte abgeschlossen ist.

Zur Lagerung der Lagerplatte selbst ist die Anordnung vorzugsweise so getroffen, daß am Rande der Aussparung eine auf die Drehachse der Lagerplatte zentrierte kreisförmige Ringschulter ausgebildet ist, an welcher die mit kreisförmigem Umriß ausgebildete Lagerplatte geführt und feststellbar ist, wobei zum Feststellen eine Verschraubung der Lagerplatte am Spannstockkörper dienen kann.

In weiterhin bevorzugter Ausführungsform der Erfindung ist für jedes Endstück der Spannteile in dem in Führungsrichtung dem Endstück jeweils gegenüber stehenden Spannteil eine nach oben geschlossene und zum Endstück hin offene Ausnehmung vorgesehen, die das Endstück beim Zusammenschieben der Spannteile aufnimmt. Dadurch können die Endstücke in die Ausnehmung des jeweils anderen Spannteils eingreifen und es wird erreicht, daß die sich überlappenden Endstücke weder die axialen Bauabmessungen des Spannstocks noch die zwischen den Spannteilen minimal mögliche Spannweite vergrößern.

Die Beaufschlagung der Spannteile mit gleich großen Kräften durch die Zylinderkolbenanordnung wird im Rahmen der Erfindung in einfacher Weise dadurch erreicht, daß die Zylinderkolbenanordnung für jedes Spannteil einen eigenen Antriebskolben aufweist und daß die beiden Antriebskolben als doppelt wirkende Kolben in einem gemeinsamen Zylindergehäuse axial hintereinander angeordnet und vom Druckmittel gegenläufig beaufschlagbar sind, wobei das Zylindergehäuse mit zur Führungsrichtung der Spannteile paralleler Zylinderachse stirnseitig am Spannstockkörper sitzt, und wobei der in Bezug auf den Spannstockkörper vordere und als Ringkolben ausgebildete Antriebskolben über eine hohle Kolbenstange mit dem zylinderseitig ersten Spannteil sowie der hintere Antriebskolben über eine den vorderen Antriebskolben, dessen hohle Kolbenstange und das erste Spannteil durchgreifende Kolbenstange mit dem zweiten Spannteil verbunden ist. Der Vorteil dieser Anordnung besteht im wesentlichen darin, daß sich die Zylinderkolbenanordnung nur am einen Ende des Spannstocks befindet und zum Spannen und Lösen jeweils nur ein Hydraulikanschluß erforderlich ist, daß ferner der Kraftangriff an beiden Spannteilen auf gleicher Höhe liegt und genau fluchtend erfolgt, und daß schließlich der Spannstockkörper von den Spannkräften weitgehend unbelastet bleibt.

Im folgenden wird die Erfindung an einem in der Zeichnung dargestellten Ausführungsbeispiel näher erläutert; es zeigen:
- Fig. 1: eine Draufsicht auf einen Spannstock nach der Erfindung, teilweise im Schnitt,
- Fig. 2: einen senkrechten Längsschnitt durch den Spannstock nach Fig. 1, mit teilweise ungeschnittenen, in Seitenansicht dargestellten Spannstockteilen,

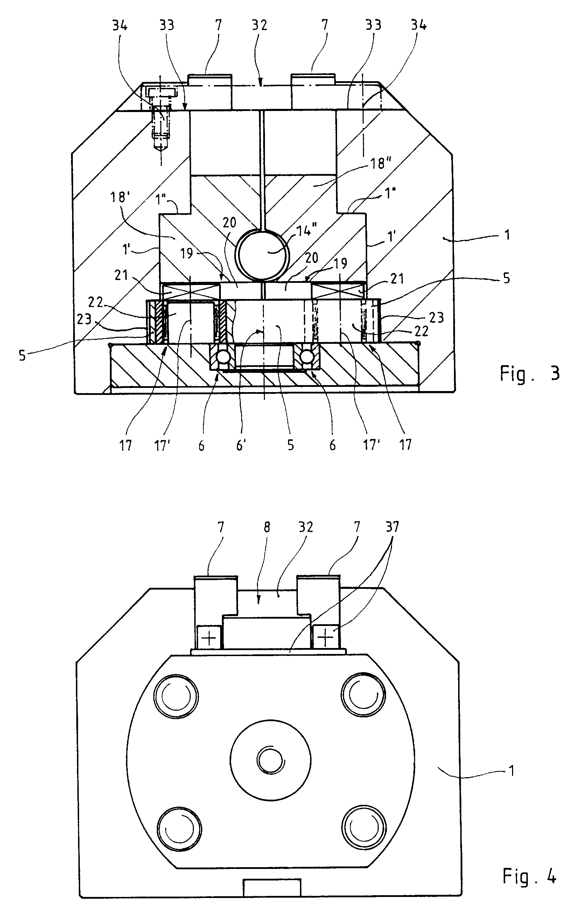

- Fig. 3: den Schnitt III - III in Fig. 2,

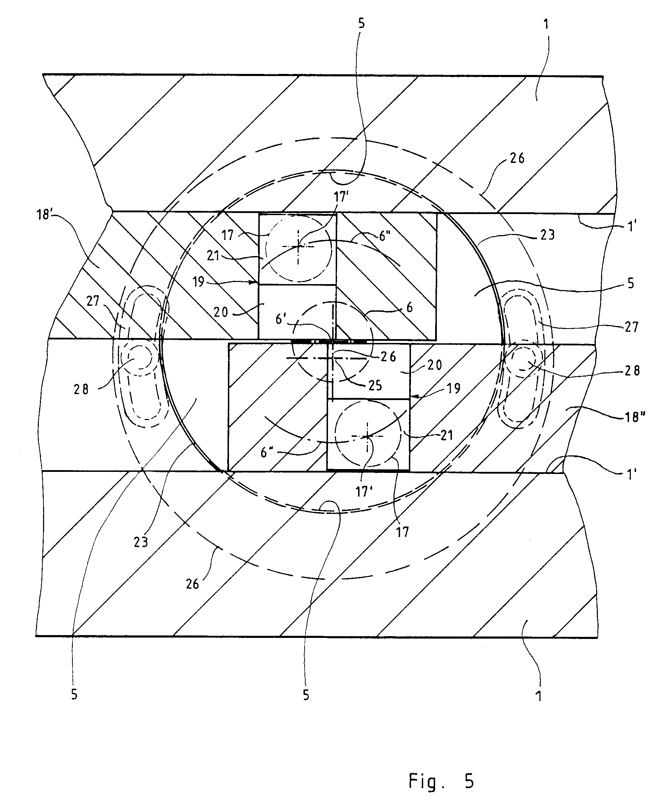

- Fig. 4: eine Stirnansicht des Spannstocks der Fig. 1 in Richtung des dort eingetragenen Pfeiles IV, und
- Fig. 5: den Schnitt V - V in Fig. 2.

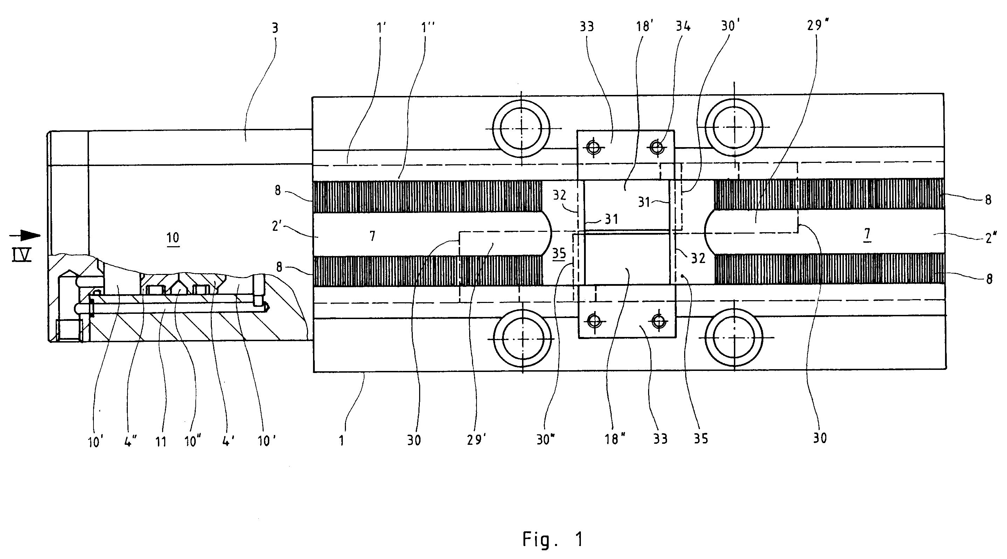

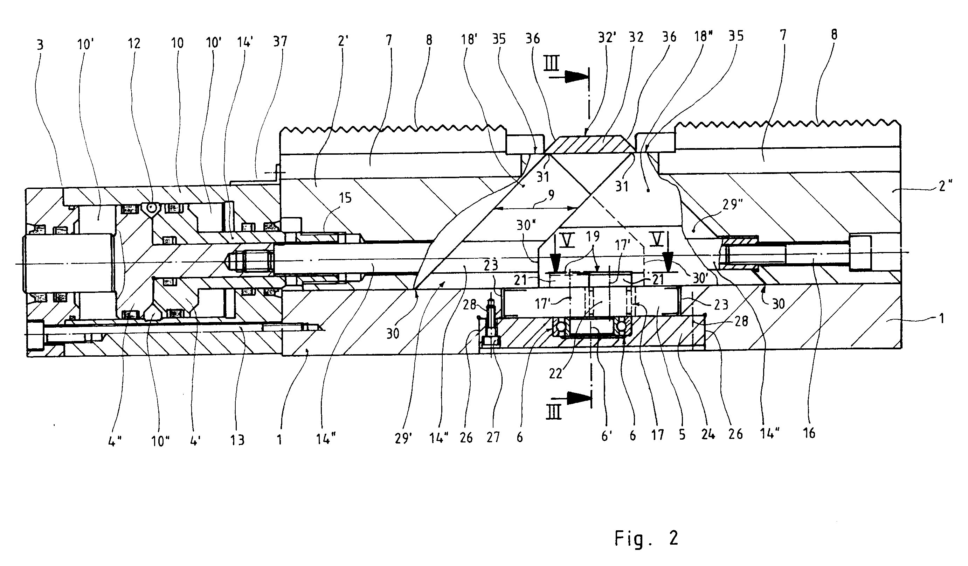

Der in der Zeichnung dargestellte Maschinenspannstock besitzt einen Spannstockkörper 1, in dem eine im Querschnitt T-förmige Führung mit senkrechten Führungsflächen 1' und horizontalen Führungsflächen 1'' ausgebildet ist. In dieser Führung sind zwei Spannteile 2', 2'' verschiebbar geführt. Die Spannteile 2', 2'' bewegen sich zentrisch in Bezug auf eine in Fig. 2 in der Schnittlinie III - III liegende Spannmitte. Außerdem sind die Spannteile 2', 2'' in Führungsrichtung zueinander gegenläufig antreibbar. Zu diesem Antrieb der Spannteile 2', 2'' dient eine druckmittelbetätigte Zylinderkolbenanordnung 3, die für jedes Spannteil 2', 2'' einen eigenen Antriebskolben 4', 4'' aufweist. Dabei ist die Anordnung so getroffen, daß die von den Antriebskolben 4', 4'' auf die Spannteile 2', 2'' ausgeübten Antriebskräfte gleich sind. Zur gegenläufigen Kopplung der Spannteile 2', 2'' miteinander und in Bezug auf die Spannmitte dient ein die beiden Spannteile zwangsweise verbindendes Getriebe mit einem in Fig. 1 ungeschnitten in Seitenansicht dargestellten Getriebeglied, das an den Spannstockkörper 1 mit einem Gelenk 6 angeschlossen ist, welches in der Führungsrichtung der Spannteile 2', 2'' die Lage des Getriebes und damit die Lage der Spannmitte in Bezug auf den Spannkörper 1 bestimmt. Im übrigen ist in jedem Spannteil 2', 2'' eine sich an dessen Oberseite öffnende, im Querschnitt ebenfalls T-förmige Führungsnut 7 zwischen zwei Zahnleisten 8 vorgesehen. Diese Führungsnut 7 mit den beiden Zahnleisten 8 dient zur Aufnahme einer in Führungsrichtung auf dem Spannteil 2', 2'' versetzbaren Spannbacke. Diese Spannbacken sind in der Zeichnung der besseren Übersichtlichkeit wegen nicht dargestellt. Sie stützen sich von oben auf den Zahnleisten 8 ab, greifen mit einem Fuß in den oberen Teil der T-Führungsnut 7 und können gegen einen in dieser Führungsnut 7 sitzenden Gleitstein verspannt werden. In der Zeichnung ist diejenige Stellung der Spannteile 2', 2'' dargestellt, die dem voll geöffneten Zustand des Spannstocks entspricht. Aus diesem Zustand können die Spannteile 2', 2'' um die in Fig. 2 durch den Doppelpfeil 9 dargestellte Strecke aufeinander zubewegt werden, bis sie aneinander stoßen.

Zu diesem Antrieb der Spannteile 2', 2'' in der einen oder anderen Bewegungsrichtung sind die beiden Antriebskolben 4', 4'' als doppelt wirkende Kolben in einem gemeinsamen Zylindergehäuse 10 axial hintereinander angeordnet und vom Druckmittel gegenläufig beaufschlagbar. Dazu können die auf voneinander abgewandten Seiten der Antriebszylinder 4', 4'' liegenden Zylinderkammern 10' gemeinsam über eine bei 11 in Fig. 1 angedeutete Versorgungsleitung, die zwischen den beiden Antriebskolben 4', 4'' liegende Zylinderkammer 10'' über eine in Fig. 2 bei 12 sichtbare Leitung mit dem Druckmittel versorgt werden. Das Zylindergehäuse 10 ist mit zur Führungsrichtung der Spannteile 2', 2'' paralleler Zylinderachse stirnseitig am Spannstockkörper 1 angeschraubt, wobei in Fig. 2 eine dieser Schrauben bei 13 angedeutet ist. Der in Bezug auf den Spannstockkörper 1 vordere und als Ringkolben ausgebildete Antriebskolben 4' steht über eine hohle Kolbenstange 14' mit dem zylinderseitig ersten Spannteil 2' in Verbindung, während der hintere Antriebskolben 4'' über eine weitere Kolbenstange 14'' mit dem zweiten Spannteil 2'' verbunden ist, wobei diese Kolbenstange 14'' den vorderen Antriebskolben 4', dessen hohle Kolbenstange 14' und das erste Spannteil 2' durchgreift. Die hohle Kolbenstange 14' ist über ein Gewinde 15 im ersten Spannteil 2', die zweite Kolbenstange 14'' über eine Schraube 16 im zweiten Spannteil 2'' verschraubt. - Wird im Ergebnis die Zylinderkammer 10'' zwischen den beiden Antriebskolben 4', 4'' mit Druckmittel beaufschlagt, bewegen sich die beiden Antriebskolben 4', 4'' axial auseinander und damit die beiden Spannteile 2', 2'' axial zusammen. Wird das Druckmittel umgeschaltet, so daß es die beiden äußeren Zylinderkammern 10' beaufschlagt, werden die beiden Antriebskolben 4', 4'' wieder axial in die in Fig. 2 gezeigte Stellung zusammengedrückt, wobei sich die beiden Spannteile 2', 2'' in Führungsrichtung auseinander bewegen. Ersichtlich erfolgt dabei keine gegenseitige Koordination der von den Antriebskolben 4', 4'' bzw. Spannteilen 2', 2'' in Bezug aufinander und auf den Spannkörper 1 durchlaufenen Stellwege. Für diese Koordination der Verstellbewegungen der Spannteile 2', 2'' derart, daß sich die Spannteile in Bezug auf die Spannmitte zentrisch bewegen, dient das Getriebe. Das an den Spannstockkörper 1 angelenkte Getriebeglied 5 ist als dargestellte Getriebescheibe ausgebildet. Sein Anschlußgelenk 6 am Spannstockkörper 1 ist ein als Wälzkörpergelenk ausgebildetes Drehgelenk mit zur Führungsrichtung der Spannteile 2', 2'' senkrechter Gelenkachse 6'. Zur Verbindung mit den Spannteilen 2', 2'' trägt das als Getriebescheibe ausgebildete Getriebeglied 5 je ein Verbindungsgelenk 17. Die beiden Verbindungsgelenke 17 sind so angeordnet, daß sie sich in Bezug auf die Gelenkachse 6' des Anschlußgelenks 6 mit gleichem, in Fig. 5 durch die Kreisbögen 6'' angedeuteten Abstand gegenüber liegen, wobei die Verbindungsgerade zwischen den Achsen 6', 17' der Verbindungsgelenke 17 und des Anschlußgelenks 6 im Rahmen des für die beiden Spannteile 2', 2'' möglichen Bewegungsspiels etwa senkrecht zur Führungsrichtung der Spannteile steht. Die Spannteile 2', 2'' besitzen quer zur Führungsrichtung nebeneinander liegende Endstücke 18', 18'', die in Führungsrichtung sowohl sich gegenseitig als auch das am Spannstockkörper 1 angelenkte Getriebeglied 5 übergreifen. Die Verbindungsgelenke 17 sind ebenfalls als wälzgelagertes Drehgelenk mit zu der des Anschlußgelenks 6 paralleler Gelenkachse 17' ausgebildet. Jedes Verbindungsgelenk 17 ist über ein Schubgelenk 19 mit dem zugeordneten Endstück 18', 18'' verbunden, wobei die Gelenkachse der Schubgelenke senkrecht sowohl zur Führungsrichtung der Spannteile 2', 2'' als auch zu den Gelenkachsen 6', 17' aller Drehgelenke 6, 17 steht. Jedes Schubgelenk 19 ist von einer in Richtung seiner Gelenkachse verlaufenden Führungsnut 20 im Endstück 18', 18'' und einem in der Führungsnut 20 verschiebbaren Nutstein 21 gebildet, der einen zum zugeordneten Verbindungsgelenk 17 gehörenden Gelenkzapfen 22 trägt. Im Ausführungsbeispiel sind die Nutsteine 21 als Gleitsteine ausgebildet; jedoch ist selbstverständlich auch eine Wälzlagerung der Nutsteine 21 in der Führungsnut 20 möglich.

Der dargestellte Spannstock besitzt nur ein einziges, am Spannstockkörper 1 angelenktes Getriebeglied 5, das unter und in der Mitte zwischen den Endstücken 18', 18'' der Spannteile 2', 2'' angeordnet ist. Das Getriebeglied 5 liegt in einer Aussparung 23 im Boden des Spannstockkörpers 1 und ist über sein Anschlußgelenk 6 an einer die Aussparung 23 an der Unterseite des Spannstockkörpers 1 abschließenden Lagerplatte 24 gelagert. Diese Lagerplatte 24 ist um eine Achse 25 verdrehbar, die zur Gelenkachse 6' des Anschlußgelenkes 6 parallel verläuft und quer zur Führungsrichtung der Spannteile 2', 2'' um den in Fig. 5 mit 26 bezeichneten Abstand exzentrisch versetzt ist. Am Rande der Aussparung 23 ist eine auf die Drehachse 25 der Lagerplatte 24 zentrierte kreisförmige Ringschulter 26 ausgebildet, an welcher die mit kreisförmigem Umriß ausgebildete Lagerplatte 24 bei ihrer Drehbewegung geführt ist. Wird im Ergebnis die Lagerplatte 24 um ihre Drehachse 25 in der Ringschulter 26 verdreht, bewegt sich die Gelenkachse 6' des Anschlußgelenks 6 auf einem Kreis um die Drehachse 25 der Lagerplatte 24 und erfährt damit in erster Näherung eine Versetzung in Führungsrichtung der Spannteile 2', 2''. Da die Lage der Gelenkachse 6' des Anschlußgelenks 6 die Spannmitte bestimmt, verschiebt sich mit der Gelenkachse 6' auch entsprechend die Spannmitte. Die Drehung der Lagerplatte 24 ist begrenzt, nämlich durch die Länge der im Bereich der Ringschulter 26 in der Lagerplatte 24 vorgesehenen, in Fig. 5 gestrichelt angedeuteten, auf einem Kreisbogen um die Drehachse 25 verlaufenden Langlöcher 27, die von Spannschrauben 28 durchgriffen sind, mit deren Hilfe die Lagerplatte 24 in ihrer jeweiligen Drehstellung gegen den Spannstockkörper 1 verspannt werden kann.

Für jedes Endstück 18', 18'' der Spannteile 2', 2'' befindet sich in dem in Führungsrichtung dem Endstück jeweils gegenüber stehenden Spannteil eine nach oben geschlossene und zum Endstück hin offene Ausnehmung 29', 29'', deren in Fig. 1 verdeckte Begrenzungslinie gestrichelt bei 30 angedeutet ist. Diese Ausnehmungen 29', 29'' nehmen die ihnen zugeordneten Endstücke, deren jeweils der Ausnehmung zugewandten Stirnflächen mit 30', 30'' bezeichnet sind, beim Zusammenschieben der Spannteile 2', 2'' auf. Die Spannteile 2', 2'' können daher zusammengeschoben werden, bis ihre sich gegenüber stehenden vorderen Begrenzungskanten 31 aneinanderstoßen.

Zwischen den Spannteilen 2', 2'' ist ein Deckel 32 vorgesehen, der in der in den Fig. 1 und 2 dargestellten auseinander geschobenen Lage der Spannteile den Raum zwischen ihnen im Bereich ihrer Endstücke 18', 18'' von oben her abdeckt. Dieser Deckel 32 ist in Fig. 1 abgenommen gedacht und daher lediglich gestrichelt angedeutet, um in Fig. 1 den Einblick in den Raum zwischen den Spannteilen 2', 2'' und auf deren Endteile 18', 18'' freizugeben. Der Deckel 32 liegt auf seitlichen Wangenflächen 33 des Spannstockkörpers 1 auf und ist dort mit Schrauben 34 gehalten. Seine zur Führungsrichtung senkrechten (in Fig. 1 also gestrichelten) Ränder übergreifen die einander zugewandten Begrenzungskanten 31 der Spannteile 2', 2'', so daß der Bereich zwischen den Spannteilen und den Endstücken gegen Verschmutzung gesichert ist. Werden die Spannteile 2', 2'' zur Spannmitte hin zusammengeschoben, schieben sie sich mit ihren horizontalen Vorderflächen 35 unter den Deckel 32, wobei der Deckel abgeschrägte Kantenflächen 36 aufweist, über die sich Schmutz, der auf den Vorderflächen 35 liegt, auf die Deckeloberseite 32' schieben kann. - Mit 37 ist eine am zylinderseitigen Spannteil 2' fest angeordnete Schürze bezeichnet, die beim Verschieben des Spannteils 2' dessen dann nach oben frei werdende Führung im Spannstockkörper 1 abdeckt und das Eindringen von Schmutz in die Führung verhindert.

## Patentansprüche

1. Spannstock, insbesondere Maschinenspannstock, mit einem Spannstockkörper (1) und zwei sich zentrisch in Bezug auf eine Spannmitte bewegenden Spannteilen (2', 2''), die im Spannstockkörper (1) verschiebbar geführt und in Führungsrichtung zueinander gegenläufig durch eine die Spannteile (2', 2'') mit gleicher Antriebskraft beaufschlagende, druckmittelbetätigte Zylinderkolbenanordnung antreibbar, sowie zwangsweise miteinander durch ein Getriebe mit einem Getriebeglied (5) verbunden sind, das in einem als Drehgelenk mit zur Führungsrichtung der Spannteile (2', 2'') senkrechter Gelenkachse (6') ausgebildeten Anschlußgelenk (6) gelagert ist und mit der Gelenkachse (6') die Lage der Spannmitte in Bezug auf den Spannstockkörper (1) bestimmt sowie zwei sich in Bezug auf die Gelenkachse (6') mit gleichem Abstand gegenüber liegende Verbindungsgelenke (17) aufweist, die ebenfalls als Drehgelenk mit zu der des Anschlußgelenks (6) paralleler Gelenkachse (17') ausgebildet und über weitere Zwischengelenke (19) mit den Spannteilen (2', 2'') verbunden sind, dadurch gekennzeichnet, daß die Zwischengelenke (19) als Schubgelenke mit sowohl zur Führungrichtung der Spannteile (2', 2'') als auch zur Gelenkachse (6') des Anschlußgelenkes (6) senkrecht stehender Gelenkachse ausgebildet sind und daß das Getriebeglied (5) über das Anschlußgelenk (6) an einer am Spannstockkörper (1) vorgesehenen Lagerplatte (24) gelagert ist, die um eine Achse (25) verdrehbar ist, die zur Gelenkachse (6') des Anschlußgelenks (6) parallel verläuft und quer zur Führungsrichtung der Spannteile (2', 2'') exzentrisch versetzt ist.

2. Spannstock nach Anspruch 1, dadurch gekennzeichnet, daß die Spannteile (2', 2'') quer zur Führungsrichtung nebeneinander liegende Endstücke (18', 18'') aufweisen, die in Führungsrichtung sowohl sich gegenseitig als auch das Getriebeglied (5) übergreifen.

3. Spannstock nach Anspruch 2, dadurch gekennzeichnet, daß jedes Schubgelenk von einer in Richtung seiner Gelenkachse verlaufenden Führungsnut (20) im Endstück (18', 18'') und einem in der Führungsnut verschiebbaren Nutstein (21) gebildet ist, der einen zum zugeordneten Verbindungsgelenk (17) gehörenden Gelenkzapfen (22) trägt.

4. Spannstock nach einem der Ansprüche 1 bis 3, dadurch gekennzeichnet, daß die Dreh- und/oder Schubgelenke wälzgelagert sind.

5. Spannstock nach einem der Ansprüche 2 bis 4, dadurch gekennzeichnet, daß das Getriebeglied (5) als Getriebescheibe ausgebildet ist und unter und in der Mitte zwischen den Endstücken (18', 18'') angeordnet ist.

6. Spannstock von Anspruch 5, dadurch gekennzeichnet, daß das Getriebeglied (5) in einer Aussparung (23) im Boden des Spannstockkörpers (1) liegt die an der Unterseite des Spannstockkörpers (1) durch die Lagerplatte (24) abgeschlossen ist.

7. Spannstock nach Anspruch 6, dadurch gekennzeichnet, daß am Rande der Aussparung (23) eine auf die Drehachse (25) der Lagerplatte (24) zentrierte kreisförmige Ringschulter (26) ausgebildet ist, an welcher die mit kreisförmigem Umriß ausgebildete Lagerplatte (24) geführt und feststellbar ist.

8. Spannstock nach einem der Ansprüche 2 bis 7, dadurch gekennzeichnet, daß für jedes Endstück (18', 18'') der Spannteile (2', 2'') in dem in Führungsrichtung dem Endstück jeweils gegenüber stehenden Spannteil eine nach oben geschlossene und zum Endstück hin offene Ausnehmung (29', 29'') vorgesehen ist, die das Endstück beim Zusammenschieben der Spannteile aufnimmt.

9. Spannstock nach einem der Ansprüche 1 bis 9, dadurch gekennzeichnet, daß die Zylinderkolbenanordnung (3) für jedes Spannteil (2', 2'') einen eigenen Antriebskolben (4', 4'') aufweist und daß die beiden Antriebskolben (4' 4'') als doppelt wirkende Kolben in einem gemeinsamen Zylindergehäuse (10) axial hintereinander angeordnet und vom Druckmittel gegenläufig beaufschlagbar sind, wobei das Zylindergehäuse (10) mit zur Führungsrichtung der Spannteile (2', 2'') paralleler Zylinderachse stirnseitig am Spannstockkörper (1) sitzt, und wobei der in Bezug auf den Spannstockkörper (1) vordere und als Ringkolben ausgebildete Antriebskolben (41) über eine hohle Kolbenstange (14') mit dem zylinderseitig ersten Spannteil (2') sowie der hintere Antriebskolben (4'') über eine den vorderen Antriebskolben (4'), dessen hohle Kolbenstange (14') und das erste Spannteil (2') durchgreifende Kolbenstange (14'') mit dem zweiten Spannteil (2'') verbunden ist.

## Claims

1. A vice, in particular a machine vice, having a vice body (1) and two clamping members (2', 2'') which move centrally in relation to a clamping centre and which are guided displaceably in the vice body (1) and are drivable in opposite relationship to each other in the guidance direction by a pressure fluid-actuated piston-cylinder arrangement which acts on the clamping members (2', 2'') with the same drive force, the clamping members being positively connected together by a transmission means having a transmission member (5) which is mounted in a connection joint (6) in the form of a rotary joint with a joint axis (6') perpendicular to the guidance direction of the clamping members (2', 2''), and with the joint axis (6') determines the position of the clamping centre in relation to the vice body (1), and has two connecting joints (17) which are oppositely disposed at the same spacing in relation to the joint axis (6') and which are also in the form of a rotary joint with a joint axis (17') parallel to that of the connection joint (6), and are connected to the clamping members (2', 2'') by way of further intermediate joints (19), characterised in that the intermediate joints (19) are in the form of slide joints with the joint axis disposed perpendicularly both to the guidance direction of the clamping members (2', 2'') and also the joint axis (6') of the connection joint (6) and that the transmission member (5) is mounted by way of the connection joint (6) on a mounting plate (24) which is provided on the vice body (1) and which is rotatable about an axis (25) which extends parallel to the joint axis (6') of the connection joint (6) and is displaced eccentrically transversely relative to the guidance direction of the clamping members (2', 2'').

2. A vice according to claim 1 characterised in that the clamping members (2', 2'') have end portions (18', 18'') which are disposed side-by-side transversely relative to the guidance direction and which in the guidance direction engage both over each other and also over the transmission member (5).

3. A vice according to claim 2 characterised in that each slide joint is formed by a guide groove (20) extending in the direction of its joint axis in the end portion (18', 18'') and a slide piece (21) which is displaceable in the guide groove and which carries a joint pin (22) belonging to the associated connecting joint (17).

4. A vice according to one of claims 1 to 3 characterised in that the rotary and/or slide joints are rolling bearing-mounted.

5. A vice according to one of claims 2 to 4 characterised in that the transmission member (5) is in the form of a transmission disc and is arranged below and in the middle between the end portions (18', 18'').

6. A vice according to claim 5 characterised in that the transmission member (5) lies in a recess (23) in the bottom of the vice body (1), which is closed off at the underside of the vice body (1) by the mounting plate (24).

7. A vice according to claim 6 characterised in that provided at the edge of the recess (23) is a circular annular shoulder (26) which is centered on the axis of rotation (25) of the mounting plate (24) and at which the mounting plate (24) which has a circular periphery is guided and can be locked in position.

8. A vice according to one of claims 2 to 7 characterised in that provided for each end portion (18', 18'') of the clamping members (2', 2'') in the clamping member which is respectively opposite the end portion in the guidance direction is a recess (29', 29'') which is closed upwardly and which is open towards the end portion and which receives the end portion when the clamping members are pushed together.

9. A vice according to one of claims 1 to 9 characterised in that the piston-cylinder arrangement (3) for each clamping member (2', 2'') has its own drive piston (4', 4'') and that the two drive pistons (4', 4'') are arranged axially one behind the other as double-acting pistons in a common cylinder housing (10) and can be acted upon in opposite relationship by the pressure fluid, wherein the cylinder housing (10) is carried at the end on the vice body (1) with the cylinder axis parallel to the guidance direction of the clamping members (2', 2'') and wherein the drive piston (41) which is at the front in relation to the vice body (1) and which is in the form of an annular piston is connected by way of a hollow piston rod (14') to the clamping member (2') which is first at the cylinder end and the rear drive piston (4'') is connected to the second clamping member (2'') by way of a piston rod (14'') which extends through the front drive piston (4'), its hollow piston rod (14') and the first clamping member (2').

## Revendications

1. Bloc de serrage, notamment un bloc de serrage de machine, comportant un corps (1) et deux éléments de serrage (2',2''), qui se déplacent d'une manière centrée par rapport à un centre de serrage et qui sont guidés avec possibilité de déplacement dans le corps (1) du bloc de serrage et peuvent être entraînés dans la direction de guidage, et dans des sens réciproquement opposés, par un dispositif à cylindre et piston, qui applique une même force d'entraînement aux éléments de serrage (2', 2'') et est actionné par un fluide sous pression, et sont reliés impérativement entre eux par une transmission comportant un élément de transmission (5), qui est monté dans une articulation de raccordement (6), réalisée sous la forme d'une articulation pivotante possédant un axe d'articulation (6') perpendiculaire à la direction de guidage des éléments de serrage (2',2'') et détermine, avec l'axe d'articulation (6'), la position du centre de serrage par rapport au corps (1) du bloc de serrage, et comporte deux articulations de liaison (17), qui sont situées à une même distance de l'axe d'articulation (6'), sont également réalisées sous la forme d'une articulation pivotante comportant un axe d'articulation (17') parallèle à celui de l'articulation de raccordement (6) et sont reliées aux éléments de serrage (2',2''), au moyen d'autres articulations intermédiaires (19), caractérisé en ce que les articulations intermédiaires (19) sont réalisées sous la forme d'articulations coulissantes comportant un axe d'articulation perpendiculaire aussi bien à la direction de guidage des éléments de serrage (2', 2'') qu'à l'axe d'articulation (6') de l'articulation de raccordement (6), et que l'élément de transmission (5) est monté, par l'intermédiaire de l'articulation de raccordement (6), sur une plaque de support (24) prévue sur le corps (1) du bloc de serrage et qui peut tourner autour d'un axe (25), qui est parallèle à l'axe d'articulation (6') de l'articulation de raccordement (6) et est décalé d'une manière excentrée transversalement par rapport à la direction de guidage des éléments de serrage (2',2'').

2. Bloc de serrage selon la revendication 1, caractérisé en ce que les éléments de serrage (2',2'') possèdent des parties d'extrémité (18',18''), qui sont disposées côte-à-côte transversalement par rapport à la direction de guidage et qui s'engagent aussi bien l'une au-dessus de l'autre au-dessus de l'élément de transmission (5), dans la direction de guidage.

3. Bloc de serrage selon la revendication 2, caractérisé en ce que chaque articulation coulissantes est formée par une rainure de guidage (20), qui s'étend dans la direction de l'axe d'articulation de cette articulation, et par un bloc (21) déplaçable dans la rainure de guidage et qui porte un pivot (22) qui fait partie de l'articulation de liaison associée (17).

4. Bloc de serrage selon l'une des revendications 1 à 3, caractérisé en ce que les articulations pivotantes et/ou coulissantes sont montées sur roulements.

5. Bloc de serrage selon l'une des revendications 2 à 4, caractérisé en ce que l'élément de transmission (5) est réalisé sous la forme d'une poulie de transmission et est disposé au-dessous de et en position centrée entre les parties d'extrémité (18',18'').

6. Bloc de serrage selon la revendication 5, caractérisé en ce que l'élément de transmission (5) est situé dans un évidement (23) ménagé dans le fond du corps (1) du bloc de serrage et qui est fermé, au niveau de la face inférieure du corps (1) du bloc de serrage, par la plaque de support (25).

7. Bloc de serrage selon la revendication 6, caractérisé en ce que sur le bord de l'évidement (23) est formé un épaulement annulaire circulaire (26), qui est centré sur l'axe de rotation (25) de la plaque de support (24) et sur lequel la plaque de support (25) réalisée avec un contour de forme circulaire, est guidée et peut être fixée.

8. Bloc de serrage selon l'une des revendications 2 à 7, caractérisé en ce que pour chaque partie d'extrémité (18',18'') des éléments de serrage (2',2'') est prévu, dans l'élément de serrage situé respectivement en vis-à-vis de la partie d'extrémité dans la direction de guidage, un évidement (29',29''), qui est fermé vers le haut et s'ouvre en direction de la partie d'extrémité et qui loge la partie d'extrémité, lors de l'assemblage des éléments de serrage.

9. Bloc de serrage selon l'une des revendications 1 à 9, caractérisé en ce que le dispositif à cylindre et piston (3) possède, pour chaque élément de serrage (2',2''), un piston d'entraînement particulier (4', 4'') et que les deux pistons d'entraînement (4',4'') sont disposés, en tant que pistons à double effet, axialement l'un derrière l'autre dans un boîtier cylindrique commun (10) et peuvent être chargés en des sens opposés par le fluide sous pression, auquel cas le boîtier (10) du cylindre, qui possède un axe parallèle à la direction de guidage des éléments de serrage (2',2''), prend appui frontalement contre le corps (1) du bloc de serrage, et le piston d'entraînement (41), situé en avant par rapport au corps (1) du bloc de serrage et réalisé sous la forme d'un piston annulaire, est relié, par l'intermédiaire d'une tige creuse de piston (14'), au premier élément de serrage (2') situé du côté du cylindre, tandis que le piston arrière d'entraînement (4'') est relié au second élément de serrage (2'') par l'intermédiaire d'une tige de piston (14'') qui traverse le piston avant d'entraînement (4'), la tige creuse (14') de ce piston et le premier élément de serrage (2').
